# EUROPEAN PATENT SPECIFICATION

(11) **EP 1 224 649 B1**
(45) Date of publication and mention of the grant of the patent: **09.07.2014**
(21) Application number: 00975209.8
(22) Date of filing: 26.09.2000
(51) Int. Cl.: G09B 27/08, G09F 19/02

(54) **SELF ROTATING DISPLAY SPHERICAL DEVICE**
SELBSTDREHENDE SPHÄRISCHE ANZEIGEVORRICHTUNG
DISPOSITIF SPHERIQUE D'AFFICHAGE AUTO-ROTATIF

(30) Priority: 18.10.1999 US 160142 P
(43) Date of publication of application: 24.07.2002
(73) Proprietor: French, William W., Cardiff, CA 92007 (US)
(72) Inventor: French, William W., Cardiff, CA 92007 (US)
(74) Representative: Viering, Jentschura & Partner Patent- und Rechtsanwälte
(86) International application number: PCT/US2000/026394
(87) International publication number: WO 2001/029803

(56) References cited:
- DE-A- 4 137 175
- PATENT ABSTRACTS OF JAPAN vol. 014, no. 516 (P-1130), 13 November 1990 (1990-11-13) & JP 02 214886 A (EIJI HONDA), 27 August 1990 (1990-08-27)
- PATENT ABSTRACTS OF JAPAN vol. 1998, no. 11, 30 September 1998 (1998-09-30) & JP 10 171383 A (HIROSE MAMORU), 26 June 1998 (1998-06-26) cited in the application
- PATENT ABSTRACTS OF JAPAN vol. 005, no. 064 (P-059), 30 April 1981 (1981-04-30) & JP 56 016111 A (HITACHI LTD), 16 February 1981 (1981-02-16)
- PATENT ABSTRACTS OF JAPAN vol. 1996, no. 01, 31 January 1996 (1996-01-31) & JP 07 239652 A (MITSUBISHI PENCIL CO LTD), 12 September 1995 (1995-09-12) cited in the application
- PATENT ABSTRACTS OF JAPAN vol. 1995, no. 11, 26 December 1995 (1995-12-26) & JP 07 219426 A (MITSUBISHI PENCIL CO LTD), 18 August 1995 (1995-08-18)

## Description

### Field of the Invention

The instant invention relates to self-starting and self-powered display devices, and more particularly, to self-spinning globes powered by radiated energy.

### Background of the Invention

Various types of novelty structures which move with either no apparent support, drive mechanism, or power input are often used as toys, decorative conversation pieces or advertising media. Various embodiments of such structures have been disclosed in U.S. Patent No. 5,435,086 Huang et al., Japanese Patents Nos. 10137451, 101431101, and 10171383, all by Hirose Mamoru, Japanese Patents Nos. 7210081, 7219426, and 7239652 all to Taragi Hiroshi and German Patents Nos. DE19706736 Fushoellier, DE3725723 Steinbrinck, and DE 41377175 Lang. Most prior embodiments are not totally free of external connection. If they are not firmly anchored to an outer support, they require complex and bulky countertorque-producing mechanisms such as fan blades or other internal heavy and complex systems that consume a great deal of electrical power.

The countertorque-producing mechanisms and their supports are very evident to an observer, and do not create any interest or appreciation of ambient energy fields.

The present invention results from an attempt to devise and intriguing and educational moving structure that requires a very low level of power derived from an ambient field of electro-magnetic radiation.

JP 10-171383 discloses an automatically spinning top having an output shaft of a motor provided inside of a spherical casing made by connecting transparent bowl type half bodies fixed on an inside plane of the casing, the casing of the motor being made rotatable, the casing being provided with a rotation resistant body, and a solar battery being provided on the side of the casing.

JP 02-214886 discloses a constellation guide device having two hollow hemispheres, on which are recorded characters and graphics showing the names and figures of the constellation, the spherical surfaces thereof being joined mutually to form a rotatable hollow sphere.

### Summary of the Invention

The principal and secondary objects of this invention are to provide the simplest and least power-demanding rotating but yet stationary structure that can operate for extremely long periods of time without any apparent driving mechanism, input of power, or support bearing, and that may be suitable for use as a toy, advertising medium, novelty, or robotic component of a remote space or underwater installation.

The present invention provides a self-powered, mobile, substantially stationary structure according to the independent claim. Preferred embodiments of the present invention are described in the dependent claims.

In the preferred embodiment of the invention, these and other valuable objects are achieved by floating a sealed and hollow enclosure made of a transparent or translucent material within a volume of fluid held within a transparent sealed container of the same shape as the enclosure and mounted concentrically around it. The outer container is suspended or otherwise supported by a tripod or other like structure. The internal enclosure carries, over its surface, a design such as a map of the world, and is made to spin upon itself independently from the outer container. Due to the transparency of the container and fluid, these components are not seen by the naked eye focused on the design covering the surface of the inner enclosure. Accordingly, the design appears to be spinning without any bearing contact with the external support structure. The internal drive mechanism is anchored, in other words, derives its spinning countertorque from a weight which orients itself in response to gravity. The drive mechanism can be a conventional motor with its own armature, field magnet and commutator, or can be constituted by a circular array of electromagnets acting as a rotor as they are selectively enabled by an electronic or mechanical commutator in co-reaction with, or biased by, either the earth's magnetic field, another man-made magnetic field, the direction of ambient light or gravity. Power for the motor or electromagnets is obtained by collecting either light waves that impinge upon the enclosure throught the use of photovoltaic cells, or by receiving and rectifying radio-frequency waves from a remote transmitter.

Various commutating mechanisms for selectively and sequentially enabling the electromagnets are disclosed including an optical shutter that masks specific photo cells dedicated to particular electromagnets, an electronic electical impulse distributor and one responsive to tilt switches.

The preferred embodiment of the invention will be perceived as a replica of the planet earth floating in space and spinning forever in a stately way, autonomous, and guided by the interplay of solar energy, gravity and geomagnetic forces; a true icon for of a sustainable energy future for the earth.

The fluid supporting the enclosure may be a liquid or a gas, including air. The volume of fluid can be a large body of water or the atmosphere without need of a container. For example, filled with helium, the enclosure will spin while stationarily floating above ground.

All embodiments are intended to be stationary, that is they are devoid of any moving mechanism that could cause a substantial change of location during their operations.

In embodiments of the drive mechanism where a man-made external energy field whether photic or magnetic is used, rotation of the field may provide the spinning force applied to the enclosure.

The drive mechanism is self-contained, that is, housed within the container, if not the enclosure.

### Brief Description of the Drawing

**Figure 1** is a front elevational view of the preferred embodiment of the invention;
**Figure 2** is a cross-sectional view of the enclosure exposing the internal drive mechanism;
**Figure 3** is a perspective view of a first alternate embodiment of the drive mechanism;
**Figure 4** is a cross-sectional view of a second alternate embodiment of the drive mechanism;
**Figure 5** is a top plan view thereof;
**Figure 6** is a diagram of the electromagnet feeding current circuit;
**Figure 7** is a cross-sectional diagram of a third alternate embodiment of the drive mechanism;
**Figure 8** is a top plan view thereof;
**Figure 9** is a cross-sectional diagram of a fourth alternate embodiment of the drive mechanism;
**Figure 10** is a top plan view thereof;
**Figures 11 and 13** are partial, cross-sectional diagrammatic views of alternate locations of the drive mechanism;
**Figure 14** is a top, diagrammatical view of a single electromagnet version of the drive mechanism;
**Figure 15** is an electrical diagram of the directional bearing locator therefor; and
**Figure 16** is a cross-sectional diagrammatical view of a cylindrical embodiment of the invention.

### Description of the Preferred Embodiment of the Invention

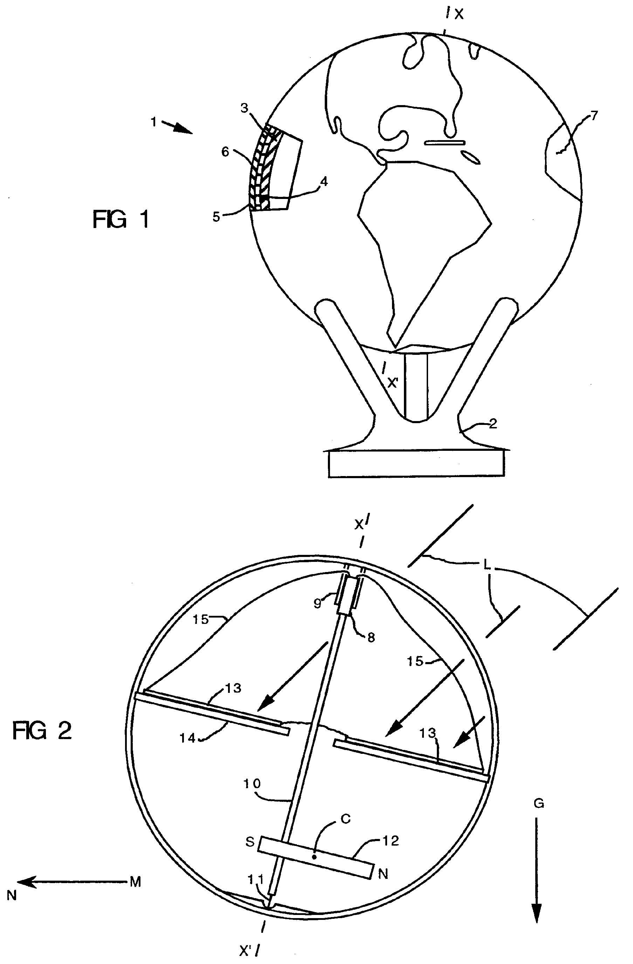

Referring now to the drawing, there is shown in Figures 1 and 2 the first embodiment of the invention in the form of a globe **1** which rests on a three-pronged support **2.** The globe comprises a spherical, closed and sealed enclosure 3 made of two hemispheric shells of acrylic glued together along an equatorial seam **4.** The enclosure **3** is concentrically surrounded by a spherical container **5** preferably made of transparent acrylic in the same manner as the enclosure **3.** The enclosure **3** and the container **5** are separated by a small space filled with a liquid **6** so that the enclosure **3** is supported and surrounded by the liquid **6,** and can spin upon itself about an axis **X-X'** independently of the container **5.** Painted or etched upon the outer surface of the enclosure **3** is a graphic design, in this case, a map of the world **7.** The weight of the enclosure is appropriately distributed to place the structure in the desired orientation.

The enclosure **3** is preferably translucent. In other words, it is permeable to light waves but can conceal the drive mechanism inside it so that it becomes invisible to a casual observer. The liquid **6** is also transparent and preferably comprises two immiscible fluids such a fluoro-carbon PFPE 5060 available from the 3-M Company of Minneapolis, Minnesota and a hydrocarabon fluid, NORPAR 12, available from the EXXON Company of Houston, Texas in a density ratio of 1.68 to 0.75 respectively. The higher density fluro-carbon fluid will normally occupy the lowermost part of the space between the enclosure and the container, and stabilize the floating structure. Any distortion caused by the different indexes of refraction of the fluids is least likely to be noticed in that region of the display. The fluids have been selected by reason of their immiscisbility, their low wetability, noncorrosivity, relative densities and coefficient of thermal expansion in relation to that of the acrylic material used in the fabrication of the two spheres. With this combination of liquids and the concentric arrangement of the sphere, any material expansion or constriction due to changes in temperature does not cause any risk of deformation or breakage.

Graphic features on the inner or outer surface of the enclosure **3** will appear to be on the outer surface of the container **5** with the proper choices of indexes of refraction and dimensions, according to well-known principles of optical refraction. This illusion works best if the container is free of visible features, but it can have a uniform tint that does not give a viewer a clue that it is not rotating. Alternatively, graphic features can be printed on the container, or objects can be floated within the fluid to create other amusing optical effects.

As shown in Figure 2, the internal drive mechanism comprises an electrical motor **8** whose stator and housing are fixedly held by a tubular casing **9** also fixedly secured to the inside wall of the enclosure **3.** A shaft **10** projecting from the rotor of the motor is supported at its distal end by a pin bearing **11** on the antipodal part of the enclosure inside wall surface. A body mass or weight **12** is fixedly attached to the shaft with its center of gravity C held distally from it. The weight responding to the gravity **G** of the earth causes the shaft or axle **10** and the axis of rotation **X-X'** to tilt slightly in order to place the weight in its lowermost possible elevation. The weight **12** acting as-a gravity sensor, tends to oppose the rotation of the shaft. Indeed, any rotation of the shaft about axis **X-X'** would result in an elevation of the center of gravity C against the pull of the earth's gravity. Accordingly, while the axle **10** is in the illustrated position, the powering of the motor **8** will cause the rotation of the stator and the entire enclosure and drive mechanism save for the axle immobilized by the weight **12** acting as a directional bearing locator, anchor and countertorque element. The weight can advantageously be magnetized so that it will align itself with the earth magnetic field and further stabilize the structure. In which case, the center of gravity **G** needs not be offset.

A multi-element photovoltaic collector **13** is mounted on the upper surface of an equatorial septum **14** fixedly connected to the enclosure **3.** Light rays or waves **L** passing through the transparent container and liquid, and the translucent wall of the enclosure **3** impinge upon the collector **13.** The resulting electrical current is fed to the motor **8** through a pair of conductors **15.** Accordingly, to the naked eye, the structure appears like a sphere spinning upon itself without any apparent supply of power, drive mechanism, or support bearings. It should be noted that the structure can be activated by solar light or any kind of man-made illumination.

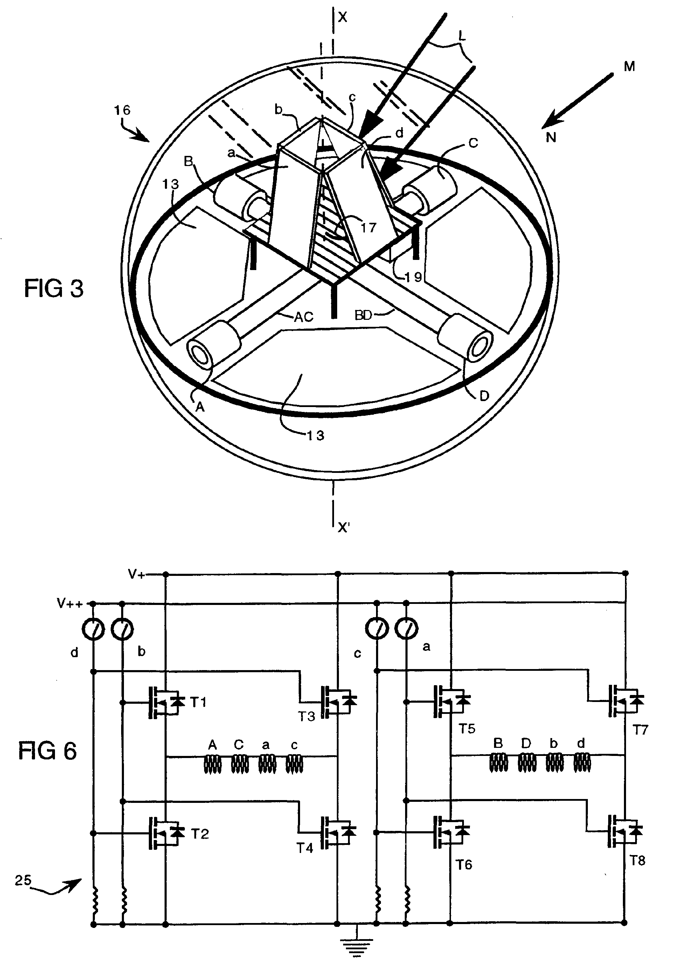

The first alternate embodiment **16** of the drive mechanism illustrated in Figure 3, relies on a known relationship between the orientation of an ambient magnetic field and the direction of another ambient field of energy such as another magnetic field, a field of radio waves or, as more specifically taught in this embodiment, a field of light waves impinging upon the enclosure. The enclosure spinning torque is derived from the earth magnetic field **M** and the directional bearing locator function is achieved by sensing the direction of the light waves **L.** The electrical motor is constituted by two electromagnets **AC and BD** positioned on the equatorial septum **14** in a cross-array wherein each electromagnet is oriented radially from the axis of rotation **X-X'.** Four photosensors **a, b, and d** are mounted in a pyramidal configuration wherein the photo-sensitive surface of each sensor lies in a different plane than the plane in which the photo-sensitive surface of any one of the other sensors lies. The angle **17** of the planes in relation to the spinning axis, can vary from zero degrees to approximately 75 degrees. Each plane is generally oriented in the same radial direction as one of the electromagnets. A series of photovoltaic collectors **13** are positioned on the septum **14** so that their photosensitive surfaces are substantially perpendicular to the axis of rotation **X-X'.** These collectors are wired together to repeatedly and sequentially enable the motor by providing a feeding and polarizing current to the electromagnets as determined by a logic unit **19** mounted under the photosensors **a, b, c, and d.**

Each of the electromagnets is preferably constituted by low coersivity iron core rod and a wire bobbin **A and C** or **B and D** at either end.

Assuming that each control photosensor is generally pointing to the same radial direction as an electromagnet bobbin of same reference, the logic unit **19** performs the following function:
If Cₐ is the greatest, then enable BD.
If C_{b} is greatest, then enable AC.
If C_{c} is greatest, then enable DB.
If C_{d} is greatest, then enable CA.

Wherein Cₐ, C_{b}, C_{c} and C_{d} represents the current flowing out of the **a, b, c, and d** control photosensors respectively, and **BD** indicates that the **BD** electromagnet is so polarized as to have its North Pole on the **B** boggin side, **DB** indicates that the **BD** electromagnet has its North Pole on the **D** bobbin side, and **AC and CA** similarly indicate the polarization of the **AC** electromagnet. This logic can be readily implemented with a gating array or by means of a microprocessor. The phase relationship between the electromagnets and the photosensors can be modified and adjusted for optimal performance.

Instead of comparing the current outputs of the respective photosensors, the logic unit 19 may be designed to respond only to a current output exceeding a preset threshold level indicative of a substantial orthogonal orientation of the sensor in relation to the direction of the magnetic field.

In a variation of the above-described drive mechanism, the control photosensors **a, b, c, and d** are selected to be of photovoltaic type, large and powerful enough to provide the feeding current to the electromagnets in the absence of the horizontally mounted photovoltaic collectors **13.** It should be noted that all of the bobbins will be energized all the time to some degree and that bobbins on opposite ends of a given magnet will tend to magnetize the rod in opposite directions. The net magnetization of a given rod will depend on which bobbin is receiving the greatest current, which depends on which of the two driving photocollectors is receiving the most light. The angular relationship between the photocollector array and the electromagnets can be set to respond to a given magnetic field direction and ambient light direction, to drive rotation essentially the same as was described in Figure 3.

The electromechanical device can consist of a single electromagnet and a single photosensor. In such a case, the spinning movement of the enclosure may have to be manually initiated.

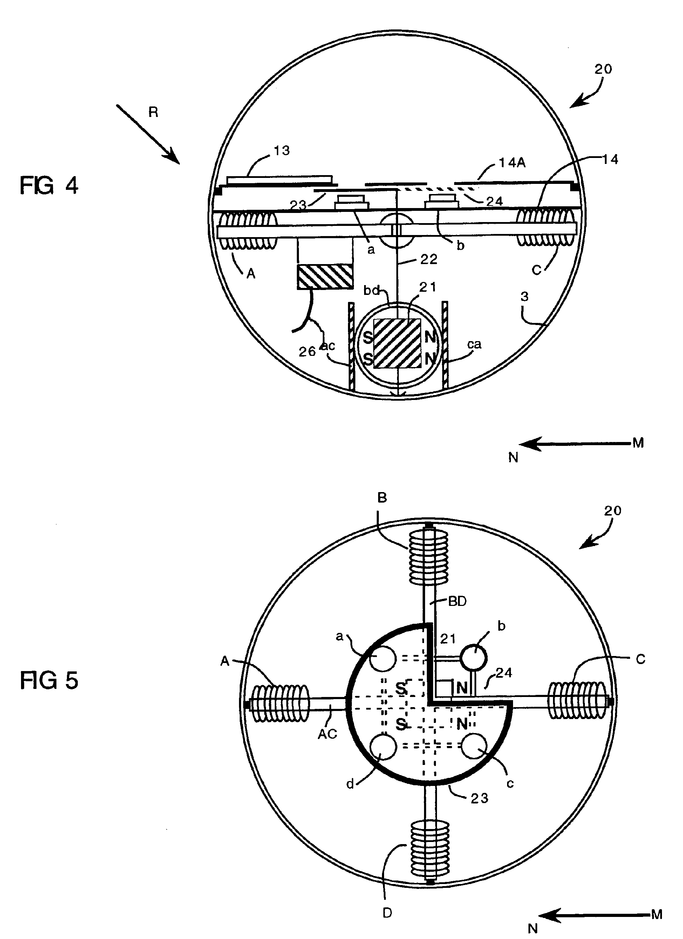

In the second alternate embodiment **20** of the drive mechanism illustrated in Figures 4-6, the directional bearing locator is constituted by a magnet **21** that acts like a compass and orients itself with the earth magnetic field **M** to position and immobilizes the freely rotating axle **22** not unlike the axle **10** in the first embodiment of the driving mechanism. The axle passes through the center of the equatorial septum **14,** and mounts at its top a circular shutter **23** having a radial sector **24** of approximately 90 degrees cut out of it. Mounted on the top surface of the septum **14,** and under the shutter **23,** is a cross-array of photosensors or photovoltaic sensor-collectors **a, b, c and d.** A second septum **14A** parallel to the first is positioned above the shutter, has an aperture above each photosensor, and acts as a diaphragm. As the whole enclosure **3** and septi **14, 14A** rotate about the central vertical axis **X-X',** the photosensors are sequentially and periodically exposed, one at a time, to light waves **L** passing through the transparent or translucent wall of the enclosure. The larger photovoltaic collector **13** mounted on the top surface of the upper septum **14A,** has a photo sensitive top surface also exposed to the light waves. The cross-array of electromagnets **AC** and **BD** of the previously described embodiments extends to the periphery of the septum **14** which each electromagnet bobbin set at a predetermined angle from one of the photosensors **a, b, c or d.** When energized, each of the electromagnets tends to orient itself with the earth magnetic field just like the magnet **21** and shutter **23.**

The ambient magnetic field along which the electromagnets seek to align themselves, may be the geomagnetic field or the field created by the locator magnet **21** if the latter is powerful enough to supplant the earth magnetic field.

As illustrated in Figure 6, the control current flowing out of the photosensors **a,b,c, and d** exposed to the light waves is used to open an electronic matrix **25** of MOSFET switches **T1-T8** which distributes the feeding current out of the large photovoltaic sensor **13** to the appropriate electromagnet with the required polarization. When an electromagnet is energized, it seeks to align itself with the ambient magnetic field and cause the entire enclosure to spin counter-clockwise when looked at from the top.

Reed switches, optical and solid state sensors such as Hall-effect sensors can be used to accomplish the commutating functions.

Reflectively mounted mirrors can be disposed on the shutter to increase the amount of light impinging upon the exposed sensor.

In lieu of, or in addition to, the large photovoltaic sensor **13,** a radio frequency antenna **26** coupled to a receiver and rectifier unit **27** mounted against the under-surface of the septum **14** can be used to generate a feeding electrical current to the electromagnets. The radio frequency waves **R** can be generated by a remote transmitter not shown on the drawing.

It should be understood that when photovoltaic sensor-collectors are used to generate the energizing current fed to the electromagnets, there is no need for the electronic switching matrix **25.**

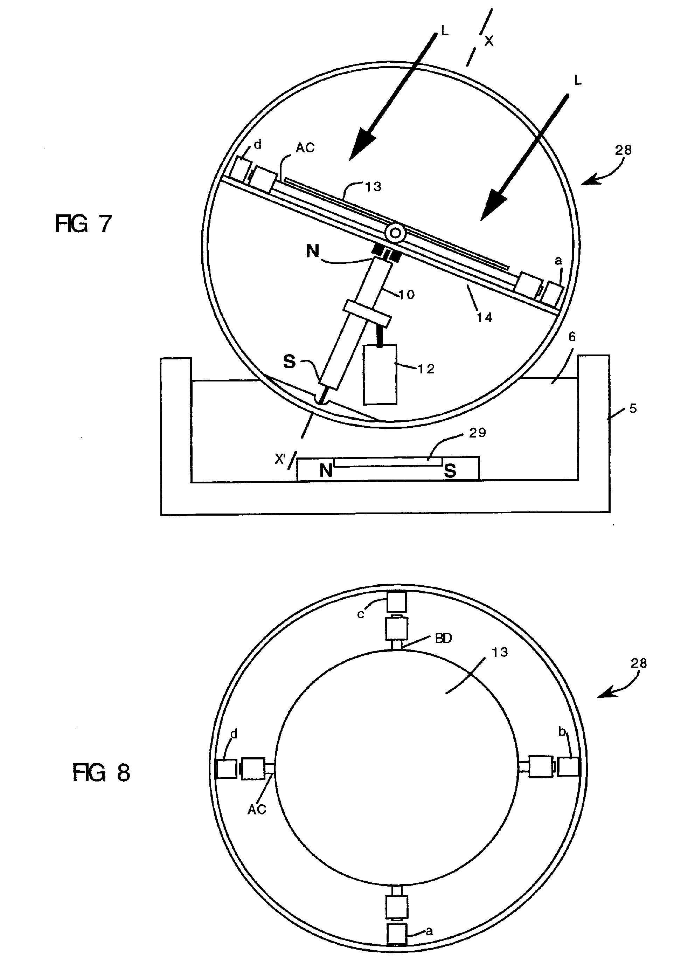

In the third alternate embodiment **28** of the drive mechanism illustrated in Figures 7 and 8, the directional bearing locator is constituted by a sensor **12** similar to the one of the first embodiment causing the enclosure **3** to spin about an axis **X-X'** which is slightly oblique to the vertical. The cross-array of electromagnets **AC** and **BD** mounted on the equatorial septum **14** is essentially the same as the one in the previously described embodiment **20.** However, the control elements are constituted by four mercury tilt switches **a, b, c and d.** The tilt switches are wired to distribute the feeding current out of the photovoltaic collector **13** to the electromagnet of like designation. However, tilt switches **a and c** are aligned with electromagnet **BD,** and tilt switches **b and d** are aligned with electromagnet **AC.** When energized, each of those electromagnets tend to align with the ambient magnetic field, such as the one created by an external magnet **29** mounted distally on the bottom.

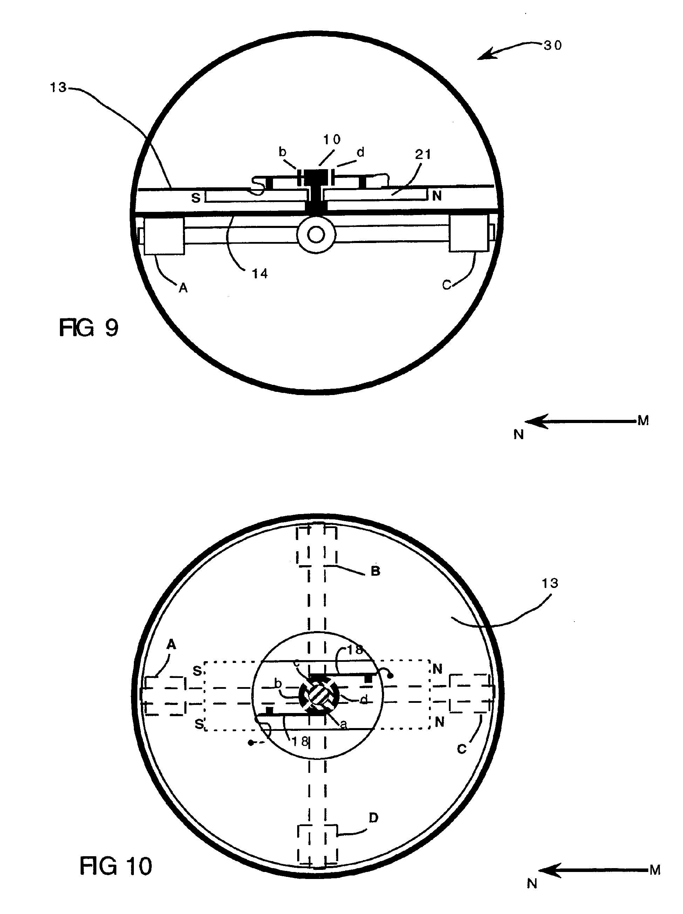

In a fourth alternate embodiment **30** of the drive mechanism illustrated in Figures 9 and 10, the magnet **21** acts as the directional bearing locator and the photovoltaic collector **13,** and is rotatively mounted on a central axle **10.** The axle, as well as the equatorial septum **14,** are fixedly attached to the enclosure **3.** A set of four ring segments **a, b, c and d** are mounted proximate the top surface of the axle in a cross-array configuration. As the enclosure spins about axis **X-X'** which is coincident with the axle **10,** a pair of brushes **18** are used to enable the cross-array of electromagnets **A, B, C and D** in a similar manner as was disclosed in connection with the previously described embodiments. The sequential and alternate distribution of the feeding current to the electromagnets including their polarity commutation are accomplished according the techniques well known to those with ordinary skill in the art.

It should be understood that the directional bearing locator of the first embodiment of the drive mechanism could be used in connection with the second described embodiment and vice versa, and that the antenna and radio frequency wave receiver could be used in connection with any of the embodiments of the mechanical drive.

The below-described improvements to the various drive mechanisms are not essential to the operation of the preferred embodiment, yet they can advantageously enhance its performances.

In order to cancel any possible effect of the magnetic field generated by the electromagnets **AC** and **BD** upon the magnetic directional bearing locator used in some of the previously described versions of the drive mechanisms, a set of four bucking coils **ac, bd, ca, and db** can be mounted around the compass magnet **21** as illustrated in Figures 4 and 5. It should be noted that the four bucking coils and the electromagnets are normally fixedly connected to the enclosure **3.** Bucking coils **bd and db** are aligned with electromagnet **BD,** and bucking coil **ac** and **ca** are aligned with electromagnet **AC.**

The circuit illustrated in Figure 6, is used to control the flow of polarizing current through both the electromagnets and the bucking coils. The object is to create through the bucking coils, a magnetic field which is, in the vicinity of the compass magnet **21,** substantially equal and opposite to the one concurrently being generated by the corresponding electromagnet by appropriately turning on the transistor switches **T1-T8.** Is should be noted that, depending upon the type and position of the sensors **a, b, c and d,** the wiring connections of the various bobbins and coils has to be appropriately switched. In some cases two single orthogonally disposed bucking coils rather than pairs of them may suffice.

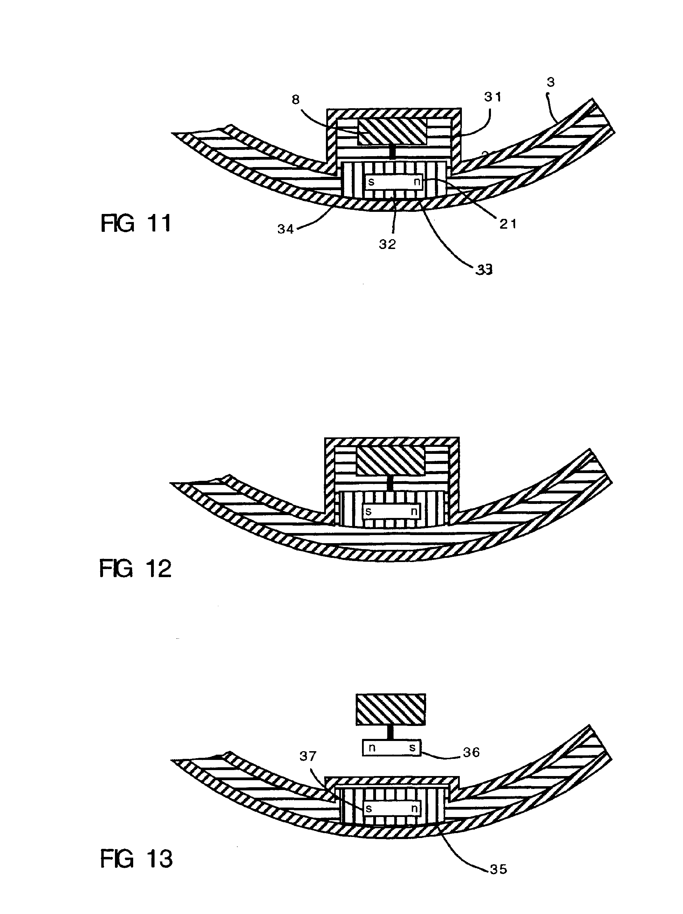

The directional bearing locator and drive mechanism need not always be mounted inside the enclosure 3. As illustrated in Figures 11-13, those two elements are immersed in the fluid **6,** and fitted into a cylindrical cavity 31 at the South pole of the enclosure 3. In Figure 11, the drive mechanism consists of the electrical motor **8** fixedly attached to the enclosure, and having its rotor and axle **10** fixedly attached to the directional bearing locator. The latter consists of a magnet **21** buried into a pivot-acting puck **32** having an undersurface **33** spherically contoured to closely match the bottom section **34** of the container. A thin film of fluid between the two surfaces allows for the proper alignment of the magnet with the geomagnetic field. A non-magnetized puck may be used. The puck, in response to gravity or the ambient field of intermolecular forces, creates enough friction or shear forces in the film of fluid or static friction against the bottom surface of the container to provide the counter-torque necessary to the motor to spin the enclosure. The bottom of the puck may also be kept distally from the container as shown in Figure **12****.**

In the embodiment of the drive mechanism shown in Figure **13****,** while the directional bearing locator is outside the enclosure, the motor is within. Coupling between the motor axle and the puck **35** is provided across the enclosure wall by means of matching magnets **36, 37,** one attached to the axle, the other to the puck. Appropriate bearings may be used between the puck and the enclosure, and the respective locations of the motor and puck may be inverted. In which case, the feeding current may be derived from structures located without the enclosure.

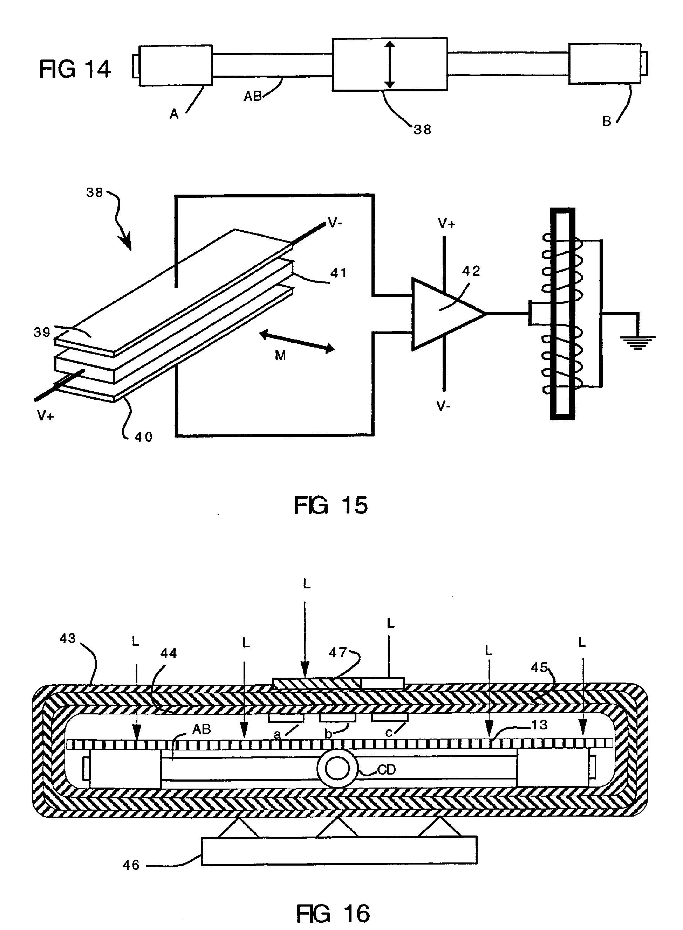

Instead of a cross-array of electromagnets, a single electromagnet may suffice to drive a particularly light enclosure. As illustrated in Figures 14 and 15, a single sensor **38** mounted on a single electromagnet **AB** can be advantageously used to control the polarization of the bobbins **A and B.**

As more specifically shown in Figure 15, a bipolar voltage (V+, V-) is applied to plates **39, 40** sandwiching an elongated Hall-Effect sensing element **41.** The element is mounted horizontally on the electromagnet or its support axle. When the ambient magnetic field **M** is perpendicular to the element **41,** it generates a Hall Voltage between the plates **39, 40.**

If the direction of the magnetic field is reversed, the polarity of the Hall Voltage will be inverted. Thus, the Hall Voltage can be applied to the bobbins **A, B** through an amplifier **42** to control their directional polarization.

If the sensor element **38** is perpendicular to the electromagnet as shown in Figure 14, the latter will be energized only when it is out of alignment with the ambient magnetic field.

In embodiments of the drive mechanism such as the ones illustrated in Figure 7, it may be advantageous to cause the enclosure to always tilt in the same direction in order to avoid wobbling and misalignment with an outer magnetic field generator. This can be accomplished by incorporating a long, axially oriented rod magnet into the axle **10** as illustrated in Figure 7. The bottom of the rod magnet interacts with the magnet **30** in the base section of the liquid **6** or container **5** to center the enclosure. The top of the rod magnet always tilts toward the same pole of the ambient magnetic field, and remains in that direction. Another way to stabilize the enclosure would be to put interfacing magnets or interlocking pin-and-cavity structures between the enclosure and container near the North and South Poles.

The design needs not necessarily be applied directly to the enclosure. A number of co-nested enclosures can be used separated by a number of transparent or tinted fluids to achieve a variety of informative or aesthetic renditions.

The container and enclosures may take a variety of shapes. Illustrated in Figure 16 is a set of nested cylindrical structures in which the outer one **43** acts like the container and the inner one **44** acts as the enclosure of the previously described embodiment. Both structures and the separating fluid **45** are light permeable. The outer structure **43** rest on a support **46.** The directional bearing locator is simply constituted by a shutter pattern **47** printed upon, or embedded into the central top portion of the outer structure **43.** This pattern is essentially similar to the shape of the shutter illustrated in Figures 4 and 5, and must be manually oriented so that the center of the angular cutout approprietely controls the energizing of the electromagnets.

Photosensors **a, b, c, d** (the latter not shown on the cross-sectional view) are installed against or into the roof of the inner structure **44** in a cross-arrangement under the shutter pattern. The main photovoltaic collector **13** and electromagnet array **AB** and **CD** are essentially similar to those described in the embodiments of Figures 4 and 5.

While the preferred embodiments of the invention have been described, modifications can be made and other embodiments may be devised without departing from the spirit of the invention and the scope of the appended claims.

## Claims

1. A self-powered, mobile, substantially stationary structure which comprises:
a spinning body (3) substantially enclosing a self-contained drive mechanism powered by energy derived from electromagnetic radiations;
wherein said mechanism includes a magnetized counter-torque producing element anchored by, and aligned along, the direction of an ambient field of energy comprising the earth magnetic field.

2. The structure of claim 1, which further comprises:
a volume of fluid (6); and
means for collecting energy from said electromagnetic radiation;
wherein said spinning body (12) comprises:
an enclosure (3; 28A) buoyantly supported by said fluid (6);
a directional bearing locator including said element; and
wherein said drive mechanism further comprises means for rotating said enclosures (3; 28A) about a first axis and in reference to said locator.

3. The structure of claim 2, wherein said means for rotating comprise an electro-mechanical device powered by said means for collecting energy.

4. The structure of claim 3, wherein:
said electromagnetic radiations comprise light waves (L); and
said means for collecting comprise a photovoltaic collector generating an electrical current when exposed to said light waves (L).

5. The structure of claim 4, wherein said electro-mechanical device comprises an electrical motor (8) energized by said electrical current.

6. The structure of claim 3, wherein:
said electromagnetic radiations comprise radio frequency waves; and
said means for collecting comprise an antenna (26) and a radio frequency receiver generating an electrical current when said antenna is exposed to said radio frequency waves.

7. The structure of claim 6, wherein said electro-mechanical device comprises an electrical motor (8) powered by said electrical current.

8. The structure of claim 3, wherein:
said ambient field of energy comprises the earth gravity; and
said locator comprises a gravity force sensor.

9. The structure of claim 8, wherein said gravity force sensor comprise a weight mounted on an axle (10) substantially aligned with said axis; and
further comprises a magnet (21) substantially parallel to said axis.

10. The structure of claim 3, wherein:
said ambient field of energy comprises the earth magnetic field; and
said locator comprises means for detecting said earth magnetic field.

11. The structure of claim 3, which further comprises a container (5; 50) holding said fluid (6); and
said enclosure (3; 28A) is held within said container (50) and spaced apart thereof by said fluid (6).

12. The structure of claim 11, wherein said enclosure (3; 28A) and said container (5; 50) are closed and said fluid (6) substantially surrounds said enclosure (3; 28A);
and wherein said enclosure (3; 28A) and said container (5; 50) have similar shapes.

13. The structure of claim 12, wherein said enclosure (3; 28A) and said container (5; 50) consist of hollow spheres.

14. The structure of claim 12, wherein:
said enclosure (3; 28A) and said container (5; 50) are made of light-permeable material;
said electromagnetic radiation comprises light waves (L); and
said means for collecting comprise a photovoltaic collector (13), associated with said enclosure (3;
28A), generating an electrical current when exposed to said light waves (L).

15. The structure of claim 12, wherein:
said electromagnetic radiations comprise radio frequency waves;
said means for collecting comprise an antenna (26) and
a radio frequency receiver generating an electrical current when said antenna (26) is exposed to said radio frequency waves; and
said electro-mechanical device is powered by said electrical current.

16. The structure of claim 3, wherein said electro-mechanical device comprises:
a motor (8) having a rotor and a stator, one of said rotor and stator being fixedly attached to said enclosure (3; 28A), and the other fixedly attached to said locator.

17. The structure of claim 3, wherein said electro-mechanical device comprises:
at least one magnetic field sensor responsive to said magnetic field; and
means for repeatedly enabling said sensor.

18. The structure of claim 17, wherein said electro-mechanical device further comprises an axle (10) substantially aligned with said axis, and said magnetic field sensor is radially mounted around said axle (10).

19. The structure of claim 18, wherein:
said sensor is rotatably connected to said axle (10) and fixedly attached to said enclosure (3; 28A); and said axle (10) is fixedly attached to said locator.

20. The structure of claim 17, wherein said locator comprises a magnetic field sensor.

21. The structure of claim 17, wherein:
said sensor comprises an electromagnet (21) which when enabled rotatably aligns itself with said magnetic field; and
said means for enabling comprise means for selectively applying a feeding current to said electromagnet (21).

22. The structure of claim 21, wherein means for selectively enabling comprise a commutating mechanism connectively biased by said locator to enable said electromagnet (21) when said electromagnet (21) is not aligned with said magnetic field.

23. The structure of claim 22, wherein:
said electromagnetic radiations further comprise light waves;
said means for collecting energy comprise a photovoltaic collector (13) responsive to said light waves (L) impinging upon said enclosure (3; 28A), and
having an output connectable to said electromagnet (21); and
said commutating mechanism comprises a shutter (23) associated with said locator, said shutter (23) being shaped and dimensioned to selectively mask said photovoltaic collector (13) when said electromagnet (21) is aligned with said magnetic field.

24. The structure of claim 22, wherein:
said electromagnetic radiations further comprise radio frequency waves;
said means for collecting comprise an antenna (26) and
a radio frequency receiver generating an electrical current when said antenna (26) is exposed to said radio frequency waves; and
said commutating mechanism comprises an electrical impulse distributor responsive to the orientation of said locator in relation to each of said electromagnets (21) to selectively apply said current to said electromagnet (21).

25. The structure of claim 22, wherein said magnetic field comprises the earth magnetic field.

26. The structure of claim 22, which further comprises at least one means positioned outside said enclosure (3; 28A) to generate said magnetic field.

27. The structure of claim 8, wherein said gravity force sensor comprises a weight rotatably connected to said enclosure (3; 28A), said weight having a center of gravity (G) held distally from said axis.

28. The structure of claim 3, wherein:
said electro-mechanical device comprises at least one electromagnet (21) and a commutating mechanism;
said locator comprises a weight rotatably connected to said enclosure (3; 28A), said weight having a center of gravity (G) held distally from said axis; and
said commutating mechanism comprises gravity switches responsive to the vertical orientation of said electromagnet (21).

29. The structure of claim 21, wherein said means for selectively applying comprise a mechanism responsive to the relative orientation of said magnetic field and the direction of said ambient field of energy.

30. The structure of claim 29, wherein:
said ambient field of energy comprising light waves (L) impinging upon said enclosure (3; 28A); and
said mechanism comprises:
at least two photosensors (a-d) for producing control currents for said electromagnet (21);
each of said photosensors (a-d) having a photo-sensitive surface, wherein the photo-sensitive surface of each of said photosensors (a-d) lies within a different plane than the plane of the photo-sensitive surface of any other photosensor (a-d).

31. The structure of claim 30, which further comprises:
at least one photovoltaic collector (13) having a photo-sensitive surface, and producing said feeding current.

32. The structure of claim 10, wherein said electro-mechanical device comprises at least one electromagnet (21) generating a polarizing magnetic field; and which further comprises at least one coil proximate said means for detecting, and at least one switch wired to energize said coil and create a corrective magnetic field opposite to said polarizing magnetic field.

33. The structure of claim 17, wherein said means for repeatedly enabling said sensor comprises means mounted of said magnetic field sensor, for generating a voltage having a polarity responsive to the orientation of said sensor.

34. The structure of claim 1, which further comprises a pivot supporting said structure above a surface.

35. The structure of claim 2 or 14, wherein said enclosure (3; 28A) further comprises an outer surface having a graphic design to conceal said drive mechanism.

## Patentansprüche

1. Eigenangetriebene, mobile, im Wesentlichen stationäre Struktur, welche aufweist:
einen sich drehenden Körper (3), der einen in sich abgeschlossenen Antriebsmechanismus umschließt, der von Energie angetrieben ist, die von elektromagnetischen Strahlungen herrührt,
wobei der Mechanismus ein magnetisiertes, Gegendrehmoment produzierendes Element aufweist, das festgelegt ist durch und ausgerichtet ist entlang die/der Richtung eines umliegenden Energiefelds, welches das Erdmagnetfeld aufweist.

2. Struktur gemäß Anspruch 1, welche ferner aufweist:
ein Fluidvolumen (6) und
Mittel zum Sammeln von Energie von der elektromagnetischen Strahlung,
wobei der sich drehende Körper (12) aufweist:
eine Umhüllung (3; 28A), die von dem Fluid (6) auftriebskraftmäßig gestützt ist,
einen Richtungslagegeber, welcher das Element aufweist, und
wobei der Antriebsmechanismus ferner aufweist Mittel zum Drehen der Umhüllungen (3; 28A) um eine erste Achse und in Bezug auf den Geber.

3. Struktur gemäß Anspruch 2, wobei die Mittel zum Drehen aufweisen eine elektromagnetische Vorrichtung, die von den Mitteln zum Sammeln von Energie angetrieben werden.

4. Struktur gemäß Anspruch 3, wobei:
die elektromagnetischen Strahlen Lichtwellen (L) aufweisen, und
die Mittel zum Sammeln aufweisen einen Fotovoltaik-Kollektor, der einen elektrischen Strom generiert, wenn er den Lichtwellen (L) ausgesetzt ist

5. Struktur gemäß Anspruch 4, wobei der elektromechanische Antrieb aufweist einen elektrischen Motor (8), der von dem elektrischen Strom mit Energie versorgt wird.

6. Struktur gemäß Anspruch 3, wobei:
die elektromechanischen Strahlen aufweisen
Radiofrequenzwellen, und
wobei die Mittel zum Sammeln aufweisen eine Antenne (26) und einen Radiofrequenzempfänger, der einen elektrischen Strom erzeugt, wenn die Antenne den Radiofrequenzwellen ausgesetzt ist.

7. Struktur gemäß Anspruch 6, wobei die elektromechanische Vorrichtung einen elektrischen Motor (8) aufweist, der von dem elektrischen Strom angetrieben wird.

8. Struktur gemäß Anspruch 3, wobei:
das umliegende Energiefelld die Erdgravität aufweist, und
der Geber einen Schwerkraftsensor aufweist.

9. Struktur gemäß Anspruch 8, wobei der Schwerkraftsensor ein Gewicht aufweist, das an die Achse (10) montiert ist im Wesentlichen ausgerichtet zu der Achse, und ferner einen Magneten (21) im Wesentlichen parallel ist zu der Achse aufweist.

10. Struktur gemäß Anspruch 3, wobei:
das umliegende Energiefeld das Erdmagnetfeld aufweist und
der Geber Mittel zum Detektieren des Erdmagnetfelds aufweist.

11. Struktur gemäß Anspruch 3, welcher ferner aufweist einen Behälter (5; 50), welcher das Fluid (6) hält, und wobei die Umhüllung (3; 28A) durch das Fluid (6) im Behälter (50) und im Abstand davon gehalten ist.

12. Struktur gemäß Anspruch 11, wobei die Umhüllung (3; 28A) und der Behälter (5; 50) geschlossen sind und das Fluid (6) die Umhüllung (3; 28A) im Wesentlichen umgibt,
und wobei die Umhüllung (3; 28A) und der Behälter (5; 50) gleiche Gestalten haben.

13. Struktur gemäß Anspruch 12, wobei die Umhüllung (3; 28A) und der Behälter (5; 50) aus hohlen Sphären bestehen.

14. Struktur gemäß Anspruch 12, wobei:
die Umhüllung (3; 28A) und der Behälter (5; 50) aus Lichtpermeablem Material gemacht sind,
die elektromagnetischen Strahlung Lichtwellen (L) aufweist, und
die Mittel zum Sammeln einen Fotovoltaik-Kollektor (13) aufweisen, der mit der Umhüllung (3; 28A) assoziiert ist und
einen elektrischen Strom generiert, wenn er den Lichtwellen (L) ausgesetzt ist.

15. Struktur gemäß Anspruch 12, wobei:
die elektromagnetischen Strahlen Radiofrequenzwellen aufweisen,
die Mittel zum Sammeln eine Antenne (26) und einen Radiofrequenzempfänger aufweisen, der einen elektrischen Strom generiert, wenn die Antenne (26) den Radiofrequenzwellen ausgesetzt ist, und
die elektromechanische Vorrichtung von dem elektrischen Strom angetrieben ist.

16. Struktur gemäß Anspruch 3, wobei die elektromechanische Vorrichtung aufweist:
einen Motor (8), der einen Rotor und einen Stator hat, wobei einer von dem Rotor und dem Stator fest an der Umhüllung (3; 28A) angebracht ist und der andere fest an dem Geber angebracht ist.

17. Struktur gemäß Anspruch 3, wobei die elektromechanische Vorrichtung aufweist:
wenigstens einen Magnetfeldsensor, der auf das Magnetfeld anspricht, und
Mittel zum wiederholten In-Betrieb-Setzen des Sensors.

18. Struktur gemäß Anspruch 17, wobei die elektromechanische Vorrichtung ferner aufweist eine Achse (10), die im Wesentlichen zu der Achse ausgerichtet ist, und der Magnetfeldsensor radial um die Achse (10) herum montiert ist.

19. Struktur gemäß Anspruch 18, wobei:
der Sensor drehbar mit der Achse (10) verbunden ist und fest mit der Umhüllung (3; 28A) verbunden ist, und
die Achse (10) fest an dem Geber angebracht ist.

20. Struktur gemäß Anspruch 17, wobei der Geber einen Magnetfeldsensor aufweist.

21. Struktur gemäß Anspruch 17, wobei:
der Sensor einen Elektromagneten (21) aufweist, welcher, wenn in Betrieb gesetzt, sich selbst drehend zu dem Magnetfeld ausrichtet, und
die Mittel zum In-Betrieb-Setzen Mittel zum selektiven Beaufschlagen des Elektromagneten (21) mit einem Speisestrom aufweisen.

22. Struktur gemäß Anspruch 21, wobei die Mittel zum selektiven In-Betrieb-Setzen einen Kommutierung-Mechanismus aufweisen, der von dem Geber verbindend vorgespannt ist, um den Elektromagneten (21) in Betrieb zu setzen, wenn der Elektromagnet (21) nicht zu dem Magnetfeld ausgerichtet ist.

23. Struktur gemäß Anspruch 22, wobei:
die elektromagnetischen Strahlen ferner Lichtwellen aufweisen, wobei die Mittel zum Sammeln von Energie einen Fotovoltaik-Kollektor (13) aufweisen, der auf die Lichtwellen (L) anspricht, die auf die Umhüllung (3; 28A) auftreffen, und der einen Ausgang hat, der mit dem Elektromagneten (21) verbindbar ist, und
wobei der Kommutierung-Mechanismus einen Verschluss (23) aufweist, der mit dem Geber assoziiert ist, wobei der Verschluss (23) gestaltet und dimensioniert ist, um den Fotovoltaik-Kollektor (13) selektiv abzudecken, wenn der Elektromagnet (21) zu dem Magnetfeld ausgerichtet ist.

24. Struktur gemäß Anspruch 22, wobei:
die elektromagnetischen Strahlen ferner Radiofrequenzwellen aufweisen,
wobei die Mittel zum Sammeln aufweisen eine Antenne (26) und einen Radiofrequenzempfänger, der einen elektrischen Strom erzeugt, wenn die Antenne (26) den Radiofrequenzwellen ausgesetzt ist, und
wobei der Kommutierung-Mechanismus einen Elektroimpulsverteiler aufweist, der auf die Orientierung des Gebers in Bezug auf jeden der Elektromagneten (21) anspricht, um selektiv den Elektromagneten (21) mit dem Strom zu beaufschlagen.

25. Struktur gemäß Anspruch 22, wobei das Magnetfeld das Erdmagnetfeld aufweist.

26. Struktur gemäß Anspruch 22, welches ferner aufweist wenigstens ein Mittel, das außerhalb der Umhüllung (3; 28A) angeordnet ist, um das Magnetfeld zu erzeugen.

27. Struktur gemäß Anspruch 8, wobei der Schwerkraftsensor ein Gewicht aufweist, das drehbar mit der Umhüllung (3; 28A) verbunden ist, wobei das Gewicht ein Gravitätszentrum (G) hat, das distal von der Achse gehalten ist.

28. Struktur gemäß Anspruch 3, wobei:
die elektromechanische Vorrichtung wenigsten einen Elektromagneten (21) und einen Kommutierung-Mechanismus aufweist,
wobei der Geber ein Gewicht aufweist, das drehbar mit der Umhüllung (3; 28A) verbunden ist, wobei das Gewicht ein Gravitätszentrum (G) hat, das distal von der Achse gehalten ist, und
wobei der Kommutierung-Mechanismus Gravitätsschalter aufweist, die auf die vertikale Orientierung des Elektromagneten (21) ansprechen.

29. Struktur gemäß Anspruch 21, wobei die Mittel zum selektiven Beaufschlagen einen Mechanismus aufweisen, der auf die relative Orientierung des Magnetfelds und die Richtung des umliegenden Energiefelds anspricht.

30. Struktur gemäß Anspruch 29, wobei:
das umliegende Energiefeld Lichtwellen (L) aufweist, die auf die Umhüllung (3; 28A) auftreffen, und
wobei der Mechanismus aufweist:
wenigstens zwei Fotosensoren (a-d) zum Produzieren von Steuerströmen für den Elektromagneten (21),
wobei jeder der Fotosensoren (a-d) eine Foto-sensitive Fläche hat, wobei die Foto-sensitive Fläche von jedem der Fotosensoren (a-d) in einer von der Ebene der Foto-sensitiven Fläche von jedem anderen Fotosensor (a-d) verschiedenen Ebene liegt.

31. Struktur gemäß Anspruch 30, welche ferner aufweist:
wenigsten einen Fotovoltaik-Kollektor (13), der eine Foto-sensitive Fläche hat und den Speisestrom produziert.

32. Struktur gemäß Anspruch 10, wobei die elektromechanische Vorrichtung wenigstens einen Elektromagneten (21) aufweist, der ein polarisierendes Magnetfeld erzeugt, und welche ferner aufweist wenigstens eine Spule proximal zu den Mitteln zum Erfassen, und wenigstens einen Schalter, der angeschlossen ist, um die Spule anzuregen und ein korrektives Magnetfeld entgegengesetzt zu dem polarisierenden Magnetfeld zu erzeugen.

33. Struktur gemäß Anspruch 17, wobei das Mittel zum wiederholten In-Betrieb-Setzen des Sensors aufweist Mittel, die am Magnetfeldsensor angebracht sind, zum Erzeugen einer Spannung, die eine Polarität hat in Antwort auf die Orientierung des Sensors.

34. Struktur gemäß Anspruch 1, welche ferner aufweist ein Gelenk, welches die Struktur über einer Fläche stützt.

35. Struktur gemäß Anspruch 2 oder 14, wobei die Umhüllung (3; 28A) ferner aufweist eine Außenfläche, die eine grafische Gestaltung hat, um den Antriebsmechanismus zu kaschieren.

## Revendications

1. Structure sensiblement stationnaire, mobile, autoalimentée, comprenant :
un corps en rotation (3) qui entoure sensiblement un mécanisme d'entraînement d'un seul bloc actionné par une énergie obtenue à partir de rayonnements électromagnétiques ;
dans laquelle ledit mécanisme comprend un élément de génération d'un couple de réaction magnétisé ancré à proximité, et aligné le long, de la direction d'un champ d'énergie ambiant qui comprend le champ magnétique terrestre.

2. Structure selon la revendication 1, comprenant en outre :
un volume de fluide (6) ; et
des moyens destinés à collecter l'énergie en provenance dudit rayonnement électromagnétique ;
dans laquelle ledit corps en rotation (12) comprend :
une enceinte (3 ; 28A) supportée de manière flottante par ledit fluide (6) ;
un dispositif de localisation de position directionnel comprenant ledit élément ; et
dans laquelle ledit mécanisme d'entraînement comprend en outre des moyens destinés à mettre en rotation lesdites enceintes (3 ; 28A) autour d'un premier axe et en se référant audit dispositif de localisation.

3. Structure selon la revendication 2, dans laquelle lesdits moyens de mise en rotation comprennent un dispositif électromécanique actionné par lesdits moyens destinés à collecter l'énergie.

4. Structure selon la revendication 3, dans laquelle :
lesdits rayonnements électromagnétiques comprennent des ondes lumineuses (L) ; et
lesdits moyens de collecte comprennent un dispositif de collecte photovoltaïque qui génère un courant électrique quand il est exposé auxdites ondes lumineuses (L).

5. Structure selon la revendication 4, dans laquelle ledit dispositif électromécanique comprend un moteur électrique (8) actionné par ledit courant électrique.

6. Structure selon la revendication 3, dans laquelle :
lesdits rayonnements électromagnétiques comprennent des ondes radioélectriques ; et
lesdits moyens de collecte comprennent une antenne (26) et un récepteur radioélectrique qui génère un courant électrique lorsque ladite antenne est exposée auxdites ondes radioélectriques.

7. Structure selon la revendication 6, dans laquelle ledit dispositif électromécanique comprend un moteur électrique (8) alimenté par ledit courant électrique.

8. Structure selon la revendication 3, dans laquelle :
ledit champ d'énergie ambiant comprend la gravité terrestre ; et
ledit dispositif de localisation comprend un capteur de gravité.

9. Structure selon la revendication 8, dans laquelle ledit capteur de gravité comprend une masse montée sur un axe (10) sensiblement aligné avec ledit axe ; et
elle comprend en outre un aimant (21) sensiblement parallèle audit axe.

10. Structure selon la revendication 3, dans laquelle :
ledit champ d'énergie ambiant comprend le champ magnétique terrestre ; et
ledit dispositif de localisation comprend des moyens destinés à détecter ledit champ magnétique terrestre.

11. Structure selon la revendication 3, comprenant en outre un contenant (5 ; 50) qui contient ledit fluide (6) ; et
ladite enceinte (3 ; 28A) est contenue à l'intérieur dudit contenant (50) et est espacée de celui-ci par ledit fluide (6).

12. Structure selon la revendication 11, dans laquelle ladite enceinte (3 ; 28A) et ledit contenant (5 ; 50) sont fermés et ledit fluide (6) entoure sensiblement ladite enceinte (3 ; 28A) ;
et dans laquelle ladite enceinte (3 ; 28A) et ledit contenant (5 ; 50) présentent des formes similaires.

13. Structure selon la revendication 12, dans laquelle ladite enceinte (3 ; 28A) et ledit contenant (5 ; 50) sont constitués par des sphères creuses.

14. Structure selon la revendication 12, dans laquelle :
ladite enceinte (3 ; 28A) et ledit contenant (5 ; 50) sont réalisés dans un matériau perméable à la lumière ;
ledit rayonnement électromagnétique comprend des ondes lumineuses (L) ; et
lesdits moyens de collecte comprennent un dispositif de collecte photovoltaïque (13) associé à ladite enceinte (3; 28A), qui génère un courant électrique quand il est exposé auxdites ondes lumineuses (L).

15. Structure selon la revendication 12, dans laquelle :
lesdits rayonnements électromagnétiques comprennent des ondes radioélectriques ;
lesdits moyens de collecte comprennent une antenne (26) et un récepteur radioélectrique qui génère un courant électrique lorsque ladite antenne (26) est exposée auxdites ondes radioélectriques ; et
ledit dispositif électromécanique est actionné par ledit courant électrique.

16. Structure selon la revendication 3, dans laquelle ledit dispositif électromécanique comprend :
un moteur (8) qui présente un rotor et un stator, l'un dudit rotor et dudit stator étant fixé de manière fixe à ladite enceinte (3 ; 28A), et l'autre étant fixé de manière fixe audit dispositif de localisation.

17. Structure selon la revendication 3, dans laquelle ledit dispositif électromécanique comprend :
au moins un capteur de champ magnétique sensible audit champ magnétique ; et
des moyens destinés à activer à plusieurs reprises ledit capteur.

18. Structure selon la revendication 17, dans laquelle ledit dispositif électromécanique comprend en outre un axe (10) sensiblement aligné avec ledit axe, et ledit capteur de champ magnétique est monté de manière radiale autour dudit axe (10).

19. Structure selon la revendication 18, dans laquelle :
ledit capteur est connecté de manière rotative audit axe (10) et fixé de manière fixe à ladite enceinte (3 ; 28A) ; et
ledit axe (10) est fixé de manière fixe audit dispositif de localisation.

20. Structure selon la revendication 17, dans laquelle ledit dispositif de localisation comprend un capteur de champ magnétique.

21. Structure selon la revendication 17, dans laquelle :
ledit capteur comprend un électro-aimant (21) qui s'aligne de manière rotative, quand il est activé, avec ledit champ magnétique ; et
lesdits moyens d'activation comprennent des moyens destinés à appliquer de manière sélective un courant d'alimentation audit électro-aimant (21).

22. Structure selon la revendication 21, dans laquelle les moyens d'activation sélective comprennent un mécanisme de commutation sollicité en connexion par ledit dispositif de localisation de façon à activer ledit électro-aimant (21) lorsque ledit électro-aimant (21) n'est pas aligné avec ledit champ magnétique.

23. Structure selon la revendication 22, dans laquelle :
lesdits rayonnements électromagnétiques comprennent en outre des ondes lumineuses ;
lesdits moyens de collecte d'énergie comprennent un dispositif de collecte photovoltaïque (13) sensible auxdites, ondes lumineuses (L) qui agissent sur ladite enceinte (3 ; 28A), et qui présente une sortie qui peut être connectée audit électro-aimant (21) ; et
ledit mécanisme de commutation comprend un obturateur (23) associé audit dispositif de localisation, ledit obturateur (23) présentant une forme et des dimensions destinées à masquer de manière sélective ledit dispositif de collecte photovoltaïque (13) lorsque ledit électro-aimant (21) est aligné avec ledit champ magnétique.

24. Structure selon la revendication 22, dans laquelle :
lesdits rayonnements électromagnétiques comprennent en outre des ondes radioélectriques ;
lesdits moyens de collecte comprennent une antenne (26) et un récepteur radioélectrique qui génère un courant électrique lorsque ladite antenne (26) est exposée auxdites ondes radioélectriques ; et
ledit mécanisme de commutation comprend un dispositif de distribution d'impulsions électriques sensible à l'orientation dudit dispositif de localisation par rapport à chacun desdits électro-aimants (21) de façon à appliquer de manière sélective ledit courant audit électro-aimant (21).

25. Structure selon la revendication 22, dans laquelle ledit champ magnétique comprend le champ magnétique terrestre.

26. Structure selon la revendication 22, comprenant en outre au moins des moyens positionnés à l'extérieur de ladite enceinte (3 ; 28A) et destinés à générer ledit champ magnétique.

27. Structure selon la revendication 8, dans laquelle ledit capteur de gravité comprend une masse connectée de manière rotative à ladite enceinte (3 ; 28A), ladite masse présentant un centre de gravité (G) maintenu de manière distale par rapport audit axe.

28. Structure selon la revendication 3, dans laquelle :
ledit dispositif électromécanique comprend au moins un électro-aimant (21) et un mécanisme de commutation ;
ledit dispositif de localisation comprend une masse connectée de manière rotative à ladite enceinte (3 ; 28A), ladite masse présentant un centre de la gravité (G) maintenu de manière distale par rapport audit axe ; et
ledit mécanisme de commutation comprend des commutateurs de gravité sensibles à l'orientation verticale dudit électro-aimant (21).

29. Structure selon la revendication 21, dans laquelle lesdits moyens d'application sélective comprennent un mécanisme sensible à l'orientation relative dudit champ magnétique et à la direction dudit champ d'énergie ambiant.

30. Structure selon la revendication 29, dans laquelle :
ledit champ d'énergie ambiant comprend des ondes de lumière (L) qui agissent sur ladite enceinte (3 ; 28A) ; et
ledit mécanisme comprend :
au moins deux photocapteurs (a - d) destinés à générer les courants de commande dudit électro-aimant (21) ;
chacun desdits photocapteurs (a - d) présentant une surface photosensible, dans laquelle la surface photosensible de chacun desdits photocapteurs (a - d) se situe à l'intérieur d'un plan différent du plan de la surface photosensible de n'importe quel autre photocapteur (a - d).

31. Structure selon la revendication 30, comprenant en outre :
au moins un dispositif de collecte photovoltaïque (13) qui présente une surface photosensible, et qui produit ledit courant d'alimentation.

32. Structure selon la revendication 10, dans laquelle ledit dispositif électromécanique comprend au moins un électro-aimant (21) qui génère un champ magnétique de polarisation ; et
et qui comprend en outre au moins une bobine située à proximité desdits moyens de détection, et au moins un commutateur câblé de façon à activer ladite bobine et à créer un champ magnétique de correction opposé audit champ magnétique de polarisation.

33. Structure selon la revendication 17, dans laquelle lesdits moyens destinés à activer à plusieurs reprises ledit capteur, comprennent des moyens montés sur ledit capteur de champ magnétique, destinés à générer une tension qui présente une polarité en réponse à l'orientation dudit capteur.

34. Structure selon la revendication 1, comprenant en outre un pivot qui supporte ladite structure au-dessus d'une surface.

35. Structure selon la revendication 2 ou la revendication 14, dans laquelle ladite enceinte (3 ; 28A) comprend en outre une surface extérieure qui présente un motif graphique destiné à masquer ledit mécanisme d'entraînement.
